# FASCICULE DE BREVET EUROPEEN

(11) **EP 3 484 945 B1**
(45) Date de publication et mention de la délivrance du brevet: **03.06.2020**
(21) Numéro de dépôt: 17737286.9
(22) Date de dépôt: 11.07.2017
(51) Int. Cl.: C08H 8/00

(54) **PROCEDE DE TRAITEMENT DE BIOMASSE LIGNO-CELLULOSIQUE PAR IMPREGNATION ET EXPLOSION A LA VAPEUR**
VERFAHREN ZUR BEHANDLUNG VON LIGNOCELLULOSEBIOMASSE DURCH IMPRÄGNIERUNG UND DAMPFEXPLOSION
METHOD FOR TREATING LIGNOCELLULOSIC BIOMASS BY IMPREGNATION AND STEAM EXPLOSION

(30) Priorité: 18.07.2016 FR 1656829
(43) Date de publication de la demande: 22.05.2019
(73) Titulaire: IFP Energies nouvelles, 92852 Rueil-Malmaison (FR); Institut National De La Recherche Agronomique, 75007 Paris (FR); Agro Industries Recherche Et Developpement, 51110 Pomacle (FR)
(72) Inventeur: HUDEBINE, Damien, 69007 Lyon (FR); ROUSSET, Romain, 69007 Lyon (FR); CARNNOT, Olivier, 51400 Baconnes (FR)
(86) Numéro de dépôt international: PCT/EP2017/067468
(87) Numéro de publication internationale: WO 2018/015227

(56) Documents cités:
- EP-A1- 2 774 992
- WO-A1-2013/063478
- WO-A1-2013/152771
- WO-A1-2013/190214
- WO-A1-2014/060674
- WO-A1-2015/062736
- WO-A1-2016/001156
- WO-A2-2013/124456
- FR-A1- 2 656 000

## Description

### Domaine de l'invention

L'invention concerne un procédé de traitement de biomasse lignocellulosique pour produire des jus sucrés dit de seconde génération (2G). Ces jus sucrés peuvent être utilisés pour produire d'autres produits par voie biochimique (ex : des alcools comme l'éthanol, le butanol ou d'autres molécules, par exemple des solvants tels que l'acétone etc...). Ce procédé comporte 3 étapes qui sont la préparation de liqueur, l'imprégnation de la biomasse et le prétraitement de la biomasse imprégnée par explosion à la vapeur.

### Art antérieur

La biomasse lignocellulosique représente une des ressources renouvelables les plus abondantes sur terre. Les substrats considérés sont très variés, ils concernent à la fois des substrats ligneux comme différents bois (feuillus et résineux), des coproduits issus de l'agriculture (pailles de blé, rafles de maïs, etc...) ou d'autres industries agroalimentaires, papetières, etc...

Le procédé de transformation biochimique de la lignocellulosique en jus sucrés 2G comprend notamment une étape de prétraitement et une étape d'hydrolyse enzymatique par un cocktail enzymatique. Ces procédés comportent aussi le plus souvent une étape d'imprégnation avant le prétraitement. Les jus sucrés issus de l'hydrolyse sont ensuite traités, par exemple par fermentation, et le procédé comprend également des étapes de séparation et/ou une étape de purification du produit final.

La biomasse lignocellulosique est composée de trois principaux polymères : la cellulose (35 à 50%), qui est un polysaccharide essentiellement constitué d'hexoses ; l'hémicellulose (20 à 30%), qui est un polysaccharide essentiellement constitué de pentoses ; et la lignine (15 à 25%), qui est un polymère de structure complexe et de haut poids moléculaire, composé d'alcools aromatiques reliés par des liaisons éther. Ces différentes molécules sont responsables des propriétés intrinsèques de la paroi végétale et s'organisent en un enchevêtrement complexe.

Parmi les trois polymères de base qui intègrent la biomasse lignocellulosique, la cellulose et l'hémicellulose sont ceux qui permettent la production de jus sucrés 2G.

Le plus souvent, l'hémicellulose est majoritairement décomposée en sucre durant le prétraitement et la cellulose est convertie en glucose par l'hydrolyse enzymatique. Toutefois, l'accès à la cellulose brute reste difficilement accessibles aux enzymes d'où la nécessité d'un prétraitement. Ce prétraitement permet de modifier les propriétés physico-chimiques de la lignocellulosique afin d'améliorer l'accessibilité de la cellulose aux enzymes et sa réactivité à l'hydrolyse enzymatique.

Un des prétraitements le plus efficace est l'explosion à la vapeur qui permet une hydrolyse presque totale de l'hémicellulose et une amélioration importante de l'accessibilité et la réactivité de la cellulose aux enzymes. Ce prétraitement peut être précédé d'autre(s) traitement(s).

Les brevets US-8057639 et US-8512512 proposent un procédé comprenant une première étape d'hydrolyse de l'hémicellulose en sucres C5 dans des conditions douces les préservant ainsi de leur dégradation. Cette étape est réalisée dans un premier réacteur sous une pression de 1.5 bar ou plus par injection de vapeur, à une température de 110°C ou plus, et éventuellement en présence d'acide faible. Après cette étape, un lavage est réalisé pour extraire et récupérer les jus de sucres C5 avant d'envoyer la biomasse restante, enrichie en cellulose et lignine, dans une seconde étape (second réacteur) où a lieu l'explosion à la vapeur. Ce second réacteur opère à une pression plus élevée que le premier réacteur avec une injection de vapeur à pression élevée qui provoque une détente brutale de la biomasse (explosion à la vapeur).

La demande de brevet US-2012/0104313 propose aussi une étape de traitement préalable à une explosion à la vapeur par contact de la biomasse avec de l'eau ou de la vapeur à 100-210°C pendant 1mn-24h. Après séparation de la phase liquide enrichie en hémicellulose, le solide est ensuite transféré à l'étape d'explosion à la vapeur.

Le brevet EP-2610346 décrit un procédé de traitement de la biomasse lignocellulosique en 4 étapes : un traitement dans un liquide à une température de 100-150°C, suivie d'une séparation du liquide/solide, suivie d'un prétraitement de la partie solide obtenue à 100-210°C en présence d'eau ou de vapeur pendant 1mn-24h et se terminant par une séparation liquide/solide.

De nombreux brevets proposent différentes solutions pour améliorer le prétraitement grâce à une solubilisation de l'hémicellulose conduisant à une meilleure réactivité de la biomasse à l'explosion à la vapeur : imprégnation à température élevée, imprégnation sous pression, présence d'acide, multiplications des étapes dans les mêmes conditions ou des conditions différentes.

La demande de brevet WO-2013/141776 décrit, dans le domaine papetier, un procédé d'imprégnation dans un appareil (imprégnateur) vertical dont contenant de la liqueur basique d'imprégnation, définissant ainsi une première zone dans laquelle l'imprégnation est effectuée. La matière lignocellulosique est reçue en bas de l'imprégnateur, elle est transférée vers le haut de l'imprégnateur au moyen de 2 vis de transfert. Lors de son transfert dans la seconde zone de l'imprégnateur située au-dessus du niveau du liquide, la biomasse s'égoutte et le liquide retombe dans la première zone. Dans cette configuration, le niveau de liquide est contrôlé par l'apport de liqueur basique.

Dans la disposition améliorée, du liquide est extrait dans le bas de l'imprégnateur, est filtré puis est recyclé en haut de l'imprégnateur, de façon à créer un contre-courant opposé à la direction d'avancée de la biomasse, ce qui permet d'évacuer de la biomasse des impuretés (sable...) qui sinon se déposent en bas de l'imprégnateur. Le liquide tourne en boucle en passant par un système de filtration et de la liqueur fraîche peut être ajoutée.

Il est proposé dans la présente demande un procédé utilisant l'imprégnateur décrit dans la demande WO-2013/141776, qui est adapté à une utilisation en continu et à l'échelle industrielle avec une régulation des conditions opératoires. Le procédé selon l'invention, et l'installation associée, est particulièrement applicable aux procédés de production de jus sucrés, voire d'alcools, à partir de biomasse lignocellulosique.

Ce procédé est plus simple, moins coûteux que les procédés de l'art antérieur du domaine de la production des jus sucrés. Il opère à température modérée et pression atmosphérique, et de préférence en une seule étape d'imprégnation.

### Résumé de l'invention

Plus précisément, le procédé selon l'invention concerne un procédé continu de traitement d'une biomasse lignocellulosique pour la production de jus sucrés, opéré avant une hydrolyse enzymatique, procédé comprenant :
1) une première zone de transfert de la biomasse broyée vers une première zone d'imprégnation de l'étape d'imprégnation, lesdites zones étant séparées par un bouchon de biomasse empêchant la remontée de liquide de ladite première zone d'imprégnation vers la zone de transfert,
2) une étape d'imprégnation sous pression atmosphérique réalisée dans 2 zones d'imprégnation superposées opérant à une température de 10-95°C, le temps de séjour de la biomasse dans ladite étape d'imprégnation étant de 1mn-60mn, et
   - ladite première zone d'imprégnation reçoit la biomasse pressée issue de la zone de transfert et elle contient une liqueur d'imprégnation à pH compris entre 0.1 et 7
      et
   - ladite biomasse est transférée dans une seconde zone d'imprégnation, située au-dessus de ladite première zone d'imprégnation, dans laquelle la biomasse imprégnée s'égoutte, de manière à produire une biomasse humide résultante ayant une teneur en matière sèche comprise entre 15% pds et 40% pds, et une liqueur séparée de ladite première zone d'imprégnation,
3) une deuxième zone de transfert de la biomasse humide à l'étape d'explosion à la vapeur,
   - ladite deuxième zone de transfert étant disposée dans une enceinte séparée d'une part des zones d'imprégnation de ladite étape d'imprégnation et d'autre part des zones de l'étape d'explosion à la vapeur,
   - la seconde zone d'imprégnation et les zones de l'étape d'explosion à la vapeur étant séparées de façon étanche par un bouchon de biomasse, et
   - dans ladite deuxième zone de transfert, la biomasse humide est pressée de façon à augmenter la teneur en matière sèche de la biomasse à 40% poids ou plus, et produire une liqueur résultante,
4) une étape d'explosion à la vapeur comportant :
   - une zone de cuisson pendant 1-30mn de la biomasse par injection de vapeur avec une consommation spécifique de vapeur comprise entre 0.05 et 10 tonne/tonne de matière sèche de biomasse entrant dans ladite zone, ladite zone de cuisson étant à une température de 150-250°C et une pression de 0.5-4 MPa,
   - puis une zone de détente de la biomasse issue de la zone de cuisson,
   - puis une zone de séparation de la vapeur de la biomasse,
5) une étape de préparation de la liqueur mettant en œuvre un appareil de préparation de la liqueur apte à,
   - recevoir de la liqueur extraite de la deuxième zone de transfert et/ou de la première zone d'imprégnation,
   - recevoir des apports en acide et/ou eau déterminés de façon à maintenir le pH en entrée de la première zone d'imprégnation à une valeur comprise entre 0.1 et 7
et dans lequel ladite liqueur préparée est introduite dans la première zone d'imprégnation.

L'acronyme "MS" désigne le taux de matière sèche qui est mesurée selon la norme ASTM E1756 - 08(2015) « Standard Test Method for Détermination of Total Solids in Biomass".

De préférence, dans le procédé selon l'invention, l'étape d'imprégnation est réalisée en une seule étape.

Avantageusement,
- l'étape d'imprégnation est réalisée dans 2 zones d'imprégnation disposées verticalement l'une au-dessus de l'autre et selon le même axe, séparées de façon à laisser passer la liqueur de la seconde zone vers la première zone et de façon à retenir la biomasse dans la seconde zone, le niveau du liquide de la première zone assurant la séparation entre lesdites 2 zones,
- ladite biomasse est transférée au moyen de vis de ladite première zone d'imprégnation dans ladite seconde zone d'imprégnation.

De ladite seconde zone d'imprégnation une partie de la liqueur est séparée de la biomasse imprégnée, de préférence une partie de la liqueur de la biomasse imprégnée s'égoutte (est séparée par égouttage) dans ladite première zone d'imprégnation.

Il est préférable de maintenir le niveau de liqueur quasi constant par apport de liqueur acide. Généralement, la liqueur acide est uniquement une solution d'acide sulfurique.

De préférence, la liqueur acide a un pH compris entre 0,1 et 2.

Dans un mode de réalisation de l'étape de préparation de la liqueur acide, l'appareil reçoit de la liqueur extraite de la deuxième zone de transfert et éventuellement de la liqueur de la première zone d'imprégnation. Dans un mode préféré, l'étape de préparation de la liqueur acide reçoit de la liqueur de la première zone d'imprégnation et de la liqueur extraite de la deuxième zone de transfert.

En général, l'étape de préparation de la liqueur ne reçoit pas la liqueur séparée dans ou après l'étape d'explosion à la vapeur.

Généralement, la zone de cuisson est un réacteur tubulaire horizontal, et munie d'une ou plusieurs vis transportant la biomasse de la zone de transfert en amont vers la zone de détente en aval. Par « horizontal », on comprend qu'il existe une légère inclinaison permettant l'écoulement du liquide.

De préférence, une partie au moins de la biomasse issue de l'étape d'explosion à la vapeur est soumise à une hydrolyse enzymatique et il est obtenu des jus sucrés.

De préférence, une partie au moins des jus sucrés est soumise à une fermentation alcoolique, généralement avec production d'éthanol.

L'invention concerne également une installation de traitement continu d'une biomasse lignocellulosique avant hydrolyse enzymatique, comprenant :
1) une première zone de transfert avec pressage d'une biomasse broyée vers une première zone d'imprégnation d'un réacteur d'imprégnation, lesdites zones étant séparées par un bouchon de biomasse empêchant la remontée de liquide de ladite première zone d'imprégnation vers la première zone de transfert,
2) un réacteur d'imprégnation comprenant 2 zones d'imprégnation superposées, la seconde zone d'imprégnation étant située au-dessus de la première zone d'imprégnation
   - ladite première zone d'imprégnation
      contenant une liqueur acide et étant munie d'une ouverture d'entrée de la biomasse pressée issue de la première zone de transfert,
   - le réacteur étant muni d'une vis transférant ladite biomasse depuis une ouverture d'entrée dans la première zone de transfert vers l'ouverture de sortie de la seconde zone d'imprégnation,
   - la seconde zone d'imprégnation située au-dessus du liquide de la première zone d'imprégnation étant munie de grille(s) laissant s'écouler le liquide de la seconde zone d'imprégnation dans la première zone d'imprégnation et retenant la biomasse humide dans la seconde zone d'imprégnation,
3) une deuxième zone de transfert avec pressage de la biomasse humide vers une zone d'explosion à la vapeur,
   - ladite deuxième zone de transfert étant disposée dans une enceinte séparée d'une part des zones d'imprégnation et d'autre part de la zone d'explosion à la vapeur,
   - la seconde zone d'imprégnation et la zone d'explosion à la vapeur étant séparés par un bouchon de biomasse pressée de façon à augmenter la teneur en matière sèche de la biomasse à 40% pds ou plus, ledit bouchon empêchant la remontée de liquide de la zone d'explosion à la vapeur vers la deuxième zone de transfert, et
   - ladite deuxième zone de transfert, étant munie d'une conduite de soutirage de la liqueur usée séparée de la biomasse humide lors du pressage,
4) une zone d'explosion à la vapeur comportant une vis de transfert de la biomasse à travers les zones successives suivantes :
   - une zone de cuisson de la biomasse munie d'une conduite pour amener la biomasse pressée issue de la deuxième zone de transfert et d'une conduite d'injection de vapeur,
   - une zone de détente de la biomasse issue de la zone de cuisson,
   - une zone de séparation de la vapeur de la biomasse,
5) une zone de préparation de la liqueur acide munie
   - d'une conduite amenant la liqueur usée soutirée de la deuxième zone de transfert à l'explosion et/ou une conduite amenant la liqueur usée soutirée de la première zone d'imprégnation,
   - d'une conduite amenant l'acide et/ou une conduite amenant l'eau
   - d'une conduite de recyclage dans la première zone d'imprégnation de ladite liqueur acide préparée,
   - d'un système d'agitation et éventuellement d'un moyen de chauffage.

### Description détaillée

Le procédé selon l'invention est un procédé continu de traitement d'une biomasse lignocellulosique avant hydrolyse enzymatique.

Il s'insère dans les procédés visant à produire des sucres de deuxième génération à partir desquels de nombreuses voies biochimiques permettent d'obtenir des molécules oxygénées (par exemple des alcools comme éthanol, butanol...).

Ainsi la présente demande concerne un procédé intégré d'imprégnation acide suivi d'un prétraitement par explosion à la vapeur avec un recyclage et une régulation de la liqueur acide d'imprégnation.

Ce procédé est compatible avec les procédés de production de sucres 2G (c'est-à-dire obtenus à partir de biomasse lignocellulosique) ou plus largement de molécules bio-sourcées (c'est-à-dire à partir de substrats naturels ou dérivés de substrats naturels).

### La biomasse et la zone de transfert

Selon les biomasses (pailles, bois, etc...) une étape de broyage est nécessaire pour avoir une granulométrie compatible avec les moyens technologiques et les conditions opératoires des étapes. Pour cela, un simple déchiquetage peut être suffisant mais un broyage avec ou sans affinage peut être requis.

De façon générale, la biomasse broyée présente une taille de particule (la plus grande taille) d'au plus 300mm. Le plus souvent, le broyage des pailles se fait avec des grilles de 5 à 100 mm et le bois est déchiqueté en plaquettes parallélépipédiques avec une longueur comprise entre 20 et 160 mm, une largeur comprise entre 10 et 100 mm et une épaisseur comprise entre 2 et 20 mm.

La biomasse broyée est amenée à la première zone de l'étape d'imprégnation via une première zone de transfert. De façon avantageuse, ces zones sont séparées par un bouchon de biomasse qui empêche la remontée de liquide de ladite première zone vers la zone de transfert ou encore plus en amont.

Selon l'invention, les zones de transfert avec pressage décrites dans le texte sont munies de vis une zone conique de compression permettant la formation d'un bouchon hermétique et éventuellement d'une zone perforée permet la sortie d'une liqueur. Lorsque la biomasse traitée a une teneur en MS initiale inférieure à 70%, un jus issu de la biomasse peut être produit dans la première zone de transfert sous l'effet de la compression, ce jus peut alors être collecté séparément de la biomasse qui est transférée vers la première zone d'imprégnation.

Un moyen habituellement utilisé dans ce but est une vis appelée « sealing screw » ou « plug screw » connue de l'homme du métier.

Cette vis présente une partie de forme conique, ladite partie conique étant reliée au bas de la première zone d'imprégnation. Le bouchon de biomasse se crée au bout de cette partie conique juste avant l'entrée dans la première zone d'imprégnation.

Cette vis assure ainsi une double fonction : d'une part, l'introduction de la biomasse de façon continue dans le réacteur d'imprégnation, et d'autre part la formation d'un bouchon pour faire l'étanchéité et empêcher les fuites de liqueur depuis le réacteur d'imprégnation vers la vis et l'amont de la vis.

### L'étape d'imprégnation

L'imprégnation est réalisée sous pression atmosphérique et à une température de 10-95°C. Le temps de séjour de la biomasse dans l'étape d'imprégnation est habituellement de 1mn-60mn, de préférence d'au moins 2mn, de préférence d'au moins 5mn, de préférence d'au plus 45mn, et le plus souvent de 2-35mn. De préférence, elle est effectuée en une seule étape.

L'étape s'effectue dans un réacteur d'imprégnation (ou imprégnateur) de forme tubulaire et vertical ou incliné avec un angle inférieur à 60° par rapport à la verticale. Ce réacteur comporte 2 zones d'imprégnation superposées et de préférence situées sur le même axe. La zone du bas est appelée première zone d'imprégnation et reçoit par une ouverture la biomasse pressée issue de la première zone de transfert. La zone située au-dessus (zone du haut) est appelée seconde zone d'imprégnation, elle reçoit la biomasse provenant de la première zone d'imprégnation.

Le réacteur (imprégnateur) est muni de une ou plusieurs vis qui transfère(nt) la biomasse par le bas de la première zone d'imprégnation vers l'ouverture de sortie de par le haut de la seconde zone d'imprégnation.

La première zone d'imprégnation (donc la zone où a lieu l'imprégnation) correspond à l'espace rempli par la liqueur d'imprégnation. La seconde zone d'imprégnation ne contient pas de phase liquide continue. Il est particulièrement avantageux de maintenir une répartition constante entre la première zone d'imprégnation et la seconde zone d'imprégnation. Pour ce faire, le réacteur est équipé d'un système de détection (capteur de niveau), avec de préférence un système de régulation du niveau de liqueur, permettant de garantir un remplissage au niveau souhaité.

La liqueur d'imprégnation est une solution aqueuse ayant un pH de 0.1 à 7.0, de référence de 0.1 à 6, ou mieux de 0.1 à 2, et une température de 10-95°C. L'acide est généralement de l'acide sulfurique. Ce type de liqueur est bien connu de l'homme du métier et tout acide habituellement utilisé pour l'imprégnation convient. La quantité d'acide et la température de la liqueur sont généralement fixées. Les moyens pour obtenir et maintenir la température sont connus de l'homme du métier.

L'effet de compression de la biomasse lors de la formation du bouchon (au niveau de la vis de transfert) et de décompression en entrée de la première zone d'imprégnation remplie de liqueur permet de mieux gorger la biomasse (effet d'éponge). La biomasse est transférée à travers la première zone où elle est imprégnée vers la seconde zone d'imprégnation située au-dessus du niveau de la liqueur.

Dans la seconde zone d'imprégnation, une partie de la liqueur imprégnée se sépare de la biomasse imprégnée par égouttage durant l'ascension dans la seconde zone d'imprégnation, la liqueur égouttée retombant dans la première zone d'imprégnation.

De préférence, la seconde zone d'imprégnation est munie de grille(s) retenant la biomasse humide dans la seconde zone d'imprégnation, grille qui laisse donc s'écouler le liquide de la seconde zone d'imprégnation dans la première zone d'imprégnation.

En sortie de la seconde zone d'imprégnation et du réacteur d'imprégnation, la biomasse imprégnée et égouttée est récupérée et contient peu ou pas d'eau libre. Sa teneur en matière sèche varie généralement entre 15 et 40% pds.

La liqueur séparée, appelée souvent liqueur usée, se retrouve au niveau du liquide de la première zone d'imprégnation.

L'imprégnateur est équipé d'une ou plusieurs conduites pour amener de la liqueur provenant d'une zone de préparation de liqueur ainsi que de une ou plusieurs conduites pour soutirer de la liqueur. Lesdites conduites d'entrée et de sortie de liqueur sont généralement installées de façon opposée entre le fond et le haut de la première zone d'imprégnation, ce qui permet de fonctionner en recyclage co-courant ou contre-courant.

### La préparation de la ligueur d'imprégnation

Du fait de l'imprégnation, il y a une perte de liqueur et d'acidité. Il est donc nécessaire d'ajouter régulièrement de la liqueur fraîche acide.

Ces ajouts permettent de réguler précisément le niveau de liqueur dans le réacteur d'imprégnation.

La préparation de liqueur est aussi une étape qui permet de réguler ses paramètres opératoires comme, par exemple, la température, le pH ou toute autre caractéristique. La concentration acide adéquate est réglée grâce à des appoints en acide et/ou en eau.

Elle permet également de produire une liqueur homogène.

Cette étape est réalisée dans une zone de préparation de liqueur.

On peut employer des appareils variés comme, par exemple, une cuve de mélange munie d'un système d'agitation ou un mélangeur (de préférence un mélangeur statique).

De préférence, l'appareil est équipé de capteurs de mesure de pH et de débit pour l'eau, l'acide, la liqueur usée et la liqueur préparée....

L'ensemble de ces capteurs permet de mettre en place une régulation qui équilibre les débits et les acidités de manière à avoir une marche continue stable aux conditions souhaitées.

L'appareil de préparation de la liqueur et/ou l'imprégnateur est (sont) équipé(s) pour réaliser le chauffage au moyen par exemple, d'une double enveloppe, de serpentins et/ou d'échangeurs disposés sur la boucle de recirculation (décrite ci-dessous) à côté ou directement sur lesdits appareils (cuve, mélangeur...).

L'appareil utilisé pour la préparation de la liqueur est relié à l'imprégnateur par une ou plusieurs conduites transportant la liqueur.

La liqueur peut ainsi être préparée avec la concentration et le débit adéquats qui permettent d'obtenir le pH (ou toute autre caractéristique) déterminé qui peut être la valeur consigne pour la régulation...On ne détaillera pas les moyens de régulation que l'homme du métier connait.

D'une façon générale, la zone de préparation de la liqueur acide est munie
- d'une conduite amenant la liqueur usée soutirée de la deuxième zone de transfert dans la zone d'explosion à la vapeur et/ou d'une conduite amenant la liqueur usée soutirée de la première zone d'imprégnation,
- d'une conduite amenant l'acide et/ou une conduite amenant l'eau
- d'une conduite de recyclage dans la première zone d'imprégnation de ladite liqueur acide préparée,
- d'un système d'agitation et éventuellement d'un moyen de chauffage.

Il est présenté ci-dessous des exemples de boucle de recirculation.

### Boucle simple de recirculation dite de recyclage par « pump-around »

Une boucle de recirculation de liqueur peut être avantageusement aménagée autour de la première zone de l'étape d'imprégnation et que l'on appelle communément « pump-around » car il s'agit de soutirer et de recycler dans la même zone.

Il y a deux possibilités de réinjection : à co-courant (injection en fond et soutirage en haut) ou à contre-courant (injection en haut et soutirage en fond). Cette boucle permet d'avoir une meilleure homogénéité et stabilité de la liqueur, un meilleur contact de la liqueur avec la biomasse et permet aussi de réguler le niveau de liqueur de la première zone d'imprégnation.

De préférence, la liqueur est soutirée à proximité du niveau de liquide de la première zone d'imprégnation après séparation de la biomasse. Cette liqueur est soutirée à un endroit où la concentration en liqueur usée est importante, de façon à ce que, dans la zone de préparation de liqueur, ses caractéristiques soient ajustées à celles de la liqueur fraîche.

Avant son retour, la liqueur usée passe en effet par l'étape de préparation de la liqueur où elle est additionnée d'acide et/ou d'eau dans les proportions adéquates.

Cette disposition permet d'améliorer considérablement l'homogénéité de la liqueur dans la première zone d'imprégnation, d'avoir un contact plus efficace entre la biomasse et la liqueur et de pouvoir avoir une température plus importante dans la première zone. Dans ce cas, l'avantage est d'avoir des écarts réduits entre les caractéristiques des liqueurs fraîches et des liqueurs usées.

Les caractéristiques de la liqueur entrante dans l'étape de préparation sont mesurées au moyen de capteurs (pH, débit...) et les quantités d'eau et/ou d'acide à ajouter sont déterminées par le système de régulation pour atteindre la(les)valeur(s) consigne, par exemple le pH de la liqueur à recycler dans la première zone d'imprégnation.

### Description des figures qui sera suivie à partir des références suivantes :

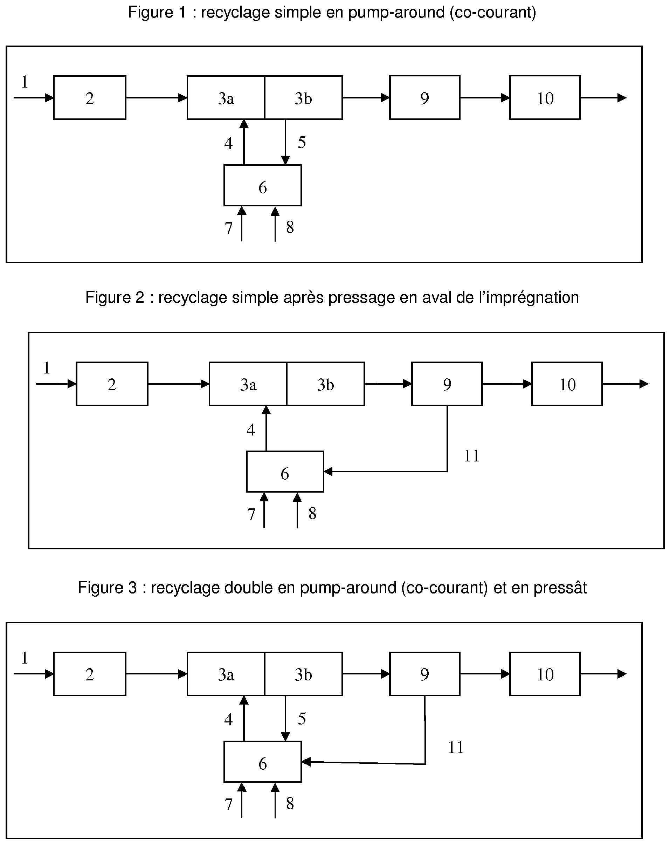

### Figure 1 : recyclage simple en pump-around (co-courant)

1 : biomasse broyée
2 : 1ere zone/étape de transfert
3a : imprégnateur, première zone
3b : imprégnateur, deuxième zone
5 : liqueur soutirée de l'imprégnateur pour recyclage en pump-around co-courant
4 : liqueur injectée dans l'imprégnateur pour recyclage en pump-around co-courant
6 : appareil (cuve) de préparation de liqueur
7 : appoint d'eau dans la cuve de préparation de liqueur
8 : appoint d'acide dans la cuve de préparation de liqueur
9 : deuxième zone/étape de transfert
10 : aval du procédé d'imprégnation (prétraitement par explosion à la vapeur).

### Figure 2 : recyclage simple après pressage en aval de l'imprégnation

1 : biomasse broyée
2 : première zone/étape de transfert
3a : imprégnateur, première zone
3b : imprégnateur, deuxième zone
4 : liqueur injectée dans l'imprégnateur pour recyclage en pump-around co-courant
6 : cuve de préparation de liqueur
7 : conduite pour l'appoint d'eau dans la cuve de préparation de liqueur
8 : conduite pour l'appoint d'acide dans la cuve de préparation de liqueur
9 : deuxième zone/étape de transfert
10 : aval du procédé d'imprégnation (prétraitement par explosion à la vapeur)
11 : liqueur soutirée par pressage (pressât) après imprégnation en deuxième zone de transfert

### Figure 3 : recyclage double en pump-around (co-courant) et en pressât

1 : biomasse broyée
2 : première zone/étape de transfert
3a : imprégnateur, première zone
3b : imprégnateur, deuxième zone
4 : liqueur injectée dans l'imprégnateur pour recyclage en pump-around co-courant
5 : liqueur soutirée de l'imprégnateur pour recyclage en pump-around co-courant
6 : cuve de préparation de liqueur
7 : appoint d'eau dans la cuve de préparation de liqueur
8 : conduite pour appoint d'acide dans la cuve de préparation de liqueur
9 : deuxième zone/étape de transfert
10 : aval du procédé d'imprégnation (prétraitement par explosion à la vapeur)
11 : liqueur soutirée par pressage (pressât) après imprégnation en deuxième zone de transfert.

La figure 1 illustre le fonctionnement de cette boucle.

La biomasse broyée est introduite par la conduite 1 dans le procédé et transférée (première zone de transfert 2) dans l'imprégnateur 3, et plus précisément dans la première zone d'imprégnation de l'imprégnateur 3a. Cette zone contient la liqueur amenée par la conduite 4 et qui provient de l'appareil (l'étape) 6 de préparation de la liqueur. Cet appareil 6 reçoit par la conduite 5, la liqueur provenant de la seconde zone d'imprégnation 3b de l'imprégnateur et qui a été séparée de la biomasse, et est muni des conduites 7 et 8 pour l'ajout respectivement d'eau et d'acide. La biomasse humide obtenue après séparation du liquide est transférée de la deuxième zone de transfert 9 vers l'étape suivante du procédé, qui est le plus souvent une étape de prétraitement par explosion à la vapeur, réalisée par exemple dans la zone 10.

### Boucle simple de recirculation avec un ou plusieurs autres flux liquide aval

D'autres flux liquides séparés après l'étape d'imprégnation (ou après l'imprégnateur), et plus précisément après la seconde zone d'imprégnation de cette étape, peuvent également être recyclés en imprégnation après passage dans l'étape (l'appareil) de préparation de liqueur. Avantageusement, les caractéristiques du flux sont mesurées par des capteurs (débit, pH, etc...) avant l'introduction du flux dans l'étape de préparation. La régulation du dispositif permet l'ajout d'eau et/ou d'acide dans les bonnes proportions pour préparer la liqueur aux caractéristiques adéquates. De préférence, ledit flux est le pressât (liquide issu de la deuxième zone de transfert de la biomasse humide à l'étape d'explosion à la vapeur). En effet ce flux est une liqueur usée qui contient encore de l'acide qui est donc valorisable.

Le fonctionnement d'un recyclage de liquide en aval de l'imprégnation est le suivant (en se référant à la figure 2): on ne reprendra pas le descriptif et les références commentées pour la figure 1 lorsqu'elles sont identiques.

Sur la figure 2, une conduite 11 amène le pressât à l'étape de préparation de la liqueur. Le pressât provient de la deuxième zone de transfert 9 (transfert de la biomasse humide à la zone d'explosion à la vapeur).

Par contre, dans cette disposition de la figure 2, la liqueur usée séparée de la biomasse dans la seconde zone d'imprégnation de l'imprégnateur n'est pas envoyée dans l'étape de préparation de la liqueur.

Cette disposition est utilisée de préférence lorsqu'il y a peu de différence entre la liqueur fraîche entrant dans la première zone et la liqueur usée séparée de la biomasse dans le pressât (ou plus généralement dans cet autre flux).

### Boucle de recirculation dite à double recyclage

Elle combine les 2 boucles de recyclage précédentes afin de bénéficier de leurs avantages cumulés.

La figure 3 illustre le fonctionnement d'un double recyclage. On ne reprendra pas les descriptifs des figures précédentes, qui sont identiques.

Ainsi, dans les figures 1 et 3, la liqueur usée 5 de la première zone d'imprégnation de l'imprégnateur fait une boucle en passant par la zone de préparation de liqueur. Ce recyclage peut se faire en co-courant ou en contre-courant de la circulation de la biomasse dans la première zone d'imprégnation de l'imprégnateur.

De même, la liqueur aval 11 (qui est par exemple le pressât issu de la deuxième zone de transfert) est envoyée dans la zone de préparation. Ainsi, la zone de préparation de la liqueur reçoit deux (ou plus) liqueurs usées et permet de les mélanger.

Les capteurs précédemment cités envoient les informations nécessaires pour déterminer les quantités adéquates d'eau et d'acide à ajouter pour obtenir une liqueur recyclée possédant le pH et le débit souhaités pour la première zone de l'imprégnateur.

Selon l'invention l'étape de préparation de liqueur peut donc être réalisée de différentes manières :
- - avec prélèvement de liqueur de l'imprégnateur et recyclage de liqueur dans la première zone d'imprégnation de l'imprégnateur ;
- avec prélèvement d'un ou plusieurs liquides présent(s) en aval de l'imprégnation (tel que le pressât) et recyclage dans la première zone d'imprégnation de l'imprégnateur; cette disposition est intéressante, notamment dans les cas où il y a peu de différence de caractéristique entre la liqueur aval et la liqueur fraîche,
- avec double recyclage c'est-à-dire avec prélèvement de liqueur de l'imprégnateur et recyclage de liqueur dans la première zone d'imprégnation de l'imprégnateur et également prélèvement d'un ou plusieurs liquides présent(s) en aval de l'imprégnation et recyclage dans la première zone d'imprégnation de l'imprégnateur. Cette disposition est largement préférée.

### Zone de transfert avec pressage vers l'étape d'explosion à la vapeur

La biomasse humide issue de la seconde zone d'imprégnation de l'étape d'imprégnation est transférée de manière continue à l'étape d'explosion à la vapeur via une deuxième zone de transfert.

Cette deuxième zone de transfert est séparée des zones d'imprégnation et n'est pas disposée dans l'enceinte de l'une ou l'autre des zones d'imprégnation. Par exemple dans le cas d'un d'imprégnateur comportant 2 zones (imprégnation et égouttage), la zone de transfert est en-dehors de l'imprégnateur.

Cette deuxième zone de transfert est également séparée des zones d'explosion à la vapeur.

De la même façon que dans la première zone de transfert amenant la biomasse à l'étape d'imprégnation, la seconde zone d'imprégnation et le réacteur où a lieu l'étape d'explosion à la vapeur sont séparés par un bouchon de biomasse. Ledit bouchon empêche la remontée de liquide des zones d'explosion à la vapeur première zone vers la zone de transfert ou plus en amont.

Cette étanchéité est assurée dans la deuxième zone de transfert entre ladite seconde zone d'imprégnation de l'étape d'imprégnation et la première zone de l'étape d'explosion à la vapeur.

Un moyen habituellement utilisé dans ce but est une vis appelée « plug screw » connue de l'homme du métier. La partie conique de la vis est ici reliée à la première zone d'explosion à la vapeur. La partie non conique est reliée à ladite seconde zone d'imprégnation.

La formation d'un bouchon de biomasse assure l'étanchéité à la pression du réacteur d'explosion à la vapeur, empêchant ainsi les fuites de vapeur dangereuses.

Dans ladite deuxième zone de transfert, la biomasse humide est pressée de façon à augmenter la teneur en MS de la biomasse. La teneur atteinte en matière sèche de la biomasse est généralement d'au moins 40% pds, de préférence elle est supérieure à 40% pds et de façon encore plus préférée elle est de 40%pds à 70%pds.

La deuxième zone de transfert est également munie d'une conduite de soutirage de la liqueur usée (dite pressât) séparée de la biomasse humide lors du pressage

La liqueur usée est avantageusement recyclée dans l'étape d'imprégnation, comme cela a été décrit précédemment.

Il doit être noté que la biomasse égouttée ne subit pas de traitement mécanique avant hydrolyse visant à réduire les tailles.

### L'étape d'explosion à la vapeur réalisée dans une zone d'explosion à la vapeur

Elle met en œuvre généralement :
- une zone de cuisson, dans laquelle la biomasse est mise en contact pendant 1-30mn avec de la vapeur avec une consommation spécifique de vapeur de 0.05-10 tonne/tonne de matière sèche de biomasse, ladite zone étant à une température de 150-250°C et une pression de 0.5-4 MPa,
- puis une zone de détente de la biomasse issue de la zone de cuisson
- puis une zone de séparation de la vapeur de la biomasse.

La vapeur récupérée est avantageusement recyclée après compression à l'étape d'explosion à la vapeur, ou éventuellement est recyclée sur les utilités du site.

De préférence cette étape est réalisée dans un réacteur tubulaire horizontal (i.e. qui peut être très légèrement incliné pour l'écoulement du liquide).

La zone de cuisson de la biomasse est munie d'une conduite pour amener la biomasse pressée issue de la deuxième zone de transfert et d'une conduite d'injection de vapeur. La cuisson est effectuée à haute température et sous pression. Cette mise en pression est assurée par injection de vapeur de façon à atteindre une pression de 0.5-4 MPa. La température de cuisson est généralement de 150-250°C. De façon préférée, les conditions sont réglées de façon à ce que le temps de cuisson soit limité à 1-30mn.

L'étape met en œuvre un réacteur qui est muni d'une vis de transfert de la biomasse à travers les zones successives. La vis assure le transport de la biomasse de façon continue, la vitesse de la vis étant réglée pour remplir les conditions de temps de séjour.

Au bout de la vis (au bout du réacteur), la biomasse est entraînée très rapidement par la vapeur vers une zone de détente dans une ligne appelée « blowline » qui a un diamètre réduit par rapport à la zone de cuisson.

La zone de détente comprend une ligne dans laquelle la biomasse circule et passe dans un organe de restriction de section puis, après avoir franchi la restriction, subit une détente brutale.

La « blowline » possède un organe de restriction de section qui peut être un orifice ou une vanne à ouverture réglable (vanne à diaphragme par exemple) permettant une section de passage faible. Au niveau de cette restriction, la biomasse arrive avec une vitesse de transport très élevée, et elle subit une variation de pression rapide et importante, puis une détente brutale après avoir franchi la restriction, ce qui déstructure la biomasse cuite. C'est pour cela que l'on parle d'explosion à la vapeur. Cette restriction fixe le débit de vapeur et donc la consommation spécifique de vapeur (débit de vapeur/débit de biomasse sèche). Généralement cette consommation spécifique de vapeur est de 0.05-10 tonne/tonne de matière sèche.

Une fois la zone de détente passée, la biomasse est entraînée par la vapeur dans la suite de la « blowline » qui possède un diamètre plus grand que la restriction (ou qui retrouve son diamètre en amont de la restriction) et qui amène la biomasse jusqu'à une zone de séparation de la vapeur, par exemple par un cyclone.

La biomasse explosée issue de la zone de séparation présente maintenant une accessibilité de la cellulose aux enzymes suffisante pour être traitée par hydrolyse enzymatique pour la production de sucres 2G.

Les conditions de l'hydrolyse enzymatique et de la fermentation consécutive ou simultanée sont adaptées aux produits souhaités et sont connues de l'homme du métier.

Ce procédé selon l'invention trouve une application particulièrement intéressante dans un procédé de préparation de sucres à partir de biomasse lignocellulosique et dans le procédé de production d'éthanol à partir desdits jus sucrés.

De tels procédés sont connus. Un procédé de préparation de sucres à partir de biomasse lignocellulosique comporte un prétraitement, qui est avantageusement une explosion à la vapeur, suivi d'une hydrolyse enzymatique. Le procédé de production d'éthanol à partir des sucres comprend en outre une fermentation alcoolique desdits sucres.

Dans un procédé selon l'invention, une partie au moins de la biomasse issue de l'étape d'explosion à la vapeur est soumise à une hydrolyse enzymatique et il est obtenu des jus sucrés. De préférence, ladite biomasse est introduite sans étape mécanique intermédiaire dans le réacteur d'hydrolyse enzymatique.

Dans un procédé selon l'invention, une partie au moins de la biomasse issue de l'étape d'explosion à la vapeur est soumise à une hydrolyse enzymatique, il est obtenu des jus sucrés et une partie au moins des jus sucrés est soumise à une fermentation alcoolique.

### Exemples

Dans les exemples décrits ci-après, l'acronyme "MS" désigne le taux de matière sèche qui est mesurée selon la norme ASTM E1756 - 08(2015) « Standard Test Method for Détermination of Total Solids in Biomass".

### Exemple 1 (comparatif)

Dans cet exemple 1, la biomasse traitée est de la paille préalablement broyée sur une grille 50mm. La paille broyée a une MS de 90,2% et une teneur en glucose estimée à 39,9 g pour 100 g de MS et une teneur en xylose estimée à 26,6 g pour 100 g de MS.

La paille est traitée selon un procédé non conforme à l'invention.

Dans une première étape, la paille broyée est mise en contact dans des bacs pendant 4 heures avec une liqueur acide préalablement chauffée à 70°C. L'opération de contactage (imprégnation de la liqueur) est réalisée en discontinue de la manière suivante : un bac de contenance 1m³ est rempli de 62,1 kg de paille broyée (soit 56 kg MS), puis une grille est positionnée sur la paille broyée et ensuite lestée avec 4 poids de 2 kg chacun. 685 kg de liqueur acide contenant 4,72 kg d'acide H₂SO₄ et le complément d'eau, sont ensuite introduits dans le bac. Après 4 heures de contact, le bac est vidangé par drainage gravitaire. La quantité moyenne de liqueur extraite est de 469 kg. La biomasse égouttée est alors transférée dans une trémie tampon, puis déversée sur un tapis de transport et enfin introduite dans une vis conique de transfert vers l'outil de cuisson en continu, à un débit moyen de 203,2 kg/h. Afin de tenir la cadence d'alimentation, un bac est préparé toutes les 82 minutes. Lors du passage dans la vis conique de transfert, un bouchon de biomasse se forme, assurant l'étanchéité avec le réacteur de cuisson maintenu à 190°C. Du liquide est extrait de la biomasse lors de sa compression dans la vis conique de transfert, à raison de 133,6 kg/h en moyenne. Le réacteur de cuisson est maintenu à 190°C par ajout de vapeur, à un débit moyen de 384,7 kg/h. En sortie de réacteur, la biomasse est dépressurisée rapidement et collectée dans un bac à pression atmosphérique. Au cours du transfert entre le réacteur de cuisson et le bac de collecte, le substrat prétraité est séparé de la phase gaz dans un cyclone. Le débit collecté de biomasse ainsi prétraité est de 85,5 kg/h. Sa MS est mesurée à 40,7%. Les vapeurs séparées en tête de cyclone sont condensées et un condensat est collecté avec un débit moyen de 368,8kg/h.

La biomasse prétraitée présente une teneur potentiel en xylose de 20,2 g pour 100g MS, dont 17,5 g pour 100g MS sont sous forme de xylose monomère et oligomères solubles.

Ainsi, le bilan xylose montre une conversion de 91,3% du xylose initialement présent.

Le procédé de l'exemple 1, non conforme à l'invention, nécessite les consommations spécifiques suivantes (rapportées à 1kg MS traité)
- eau : 12.14 kg d'eau / kg MS traitée
- acide sulfurique : 84.3 g / kg MS traitée
- vapeur : 9.4 kg / kg MS traitée

De plus, le procédé de l'exemple 1 a des besoins importants en équipements: un volume minimum pour le contactage de 2,2 m3. Le volume à pomper pour remplir les bacs de contactage est d'environ 0.5 m³/h.

### Exemple 2 (conforme à l'invention)

Dans l'exemple 2, la biomasse traitée est de la paille identique à celle de l'exemple 1. La biomasse broyée est introduite à un débit moyen de 45,4 kg /h dans l'outil d'imprégnation via une première zone de transfert dans laquelle elle est compressée. La biomasse compressée est introduite dans un outil d'imprégnation de hauteur utile de 2 mètres, équipé de deux vis parallèles permettant un convoyage vertical de la biomasse à une vitesse linéaire équivalente de 106 m/h. Le volume utile total de l'outil d'imprégnation est de 78 litres, avec un volume de la première zone d'imprégnation (zone dite immergée) de 45 litres. A 5 cm en dessous du niveau liquide, 412 kg/h de liqueur acide sont ajoutés, cette liqueur acide provient d'une zone de préparation de ladite liqueur. La température de la liqueur acide injectée est de 80°C. Ainsi dans la première zone d'imprégnation, la biomasse est mise en contact avec une liqueur acide. La température moyenne dans la première zone d'imprégnation est de 73.5°C.

Au pied de l'outil d'imprégnation, un soutirage de liquide est réalisé (liqueur usée), à un débit de 232,1 kg/h. Conformément à l'invention, ce liquide est renvoyé dans la zone de préparation de liqueur. La sortie de la biomasse imprégnée est effectuée par le haut du réacteur d'imprégnation avec un débit de 225,3 kg/h.

Dans la zone de préparation de la liqueur acide, trois flux sont ainsi amenés : la liqueur usée soutirée de l'outil d'imprégnation (à raison de 232,1 kg/h), l'acide sulfurique (exprimé en équivalent 100% poids) à un débit de 2,52 kg/h, et l'eau à un débit de 177,4 kg/h. Ces flux entrants sont mélangés dans une cuve agitée de volume unitaire de 560 litres, la liqueur préparée est soutirée (à raison de 412 kg / h), envoyée dans un échangeur de chaleur pour la chauffer à la température de 80°C, puis injectée dans l'outil d'imprégnation comme précédemment décrit.

La paille imprégnée de liqueur acide est ensuite convoyée sur un tapis puis transférée dans l'outil de cuisson via une zone de transfert dans une vis conique. Au cours de ce transfert, un liquide (liqueur usée) s'écoule à un débit de 127,8 kg/h.

Dans le réacteur de cuisson, de la vapeur est injectée à un débit de 347 kg/h. Cette injection de vapeur permet de maintenir la température du réacteur à 190°C. En sortie du réacteur, la biomasse est dépressurisée rapidement et collectée dans un bac à pression atmosphérique. Au cours du transfert entre le réacteur de cuisson et le bac de collecte, le substrat prétraité est séparé de la phase gaz dans un cyclone. Le débit collecté de substrat ainsi prétraité est de 92,8 kg/h. Sa MS est mesurée à 38,5%. Les vapeurs séparées en tête de cyclone sont condensées de manière à produire un condensat avec un débit de condensat de 351,8 kg /h.

Le substrat prétraité une teneur en xylose potentiel de 19,8g pour 100g MS, dont 17,3g pour 100g MS sont sous forme de xylose monomère et oligomères solubles. Ainsi, le bilan xylose montre une conversion de 91,7% du xylose initialement présent.

Le procédé de l'exemple 2, conforme à l'invention, nécessite les consommations spécifiques suivantes (rapportées à 1kg MS traité)
- eau : 4.34 kg d'eau / kg MS traitée
- acide sulfurique : 61,5 g / kg MS traitée
- vapeur : 8,5 kg / kg MS traitée

Ainsi, le procédé selon l'invention de l'exemple 2 permet de réaliser les mêmes niveaux de conversion du xylose dans l'étape de prétraitement que l'exemple 1 tout en assurant une réduction importantes des consommations d'eau et d'acide, de respectivement 64% de réduction de la consommation d'eau et 27% de réduction de la consommation d'acide.

De plus, le procédé de l'exemple 2 a des besoins réduits en équipements: un volume minimum pour l'imprégnation de la liqueur acide de moins de 1 m3 en incluant la cuve de préparation de liqueur et l'outil d'imprégnation. Le volume à pomper pour le pompage et soutirage des liqueurs autour de l'imprégnation est d'environ 0.6 m3/h.

### Exemple 3 (conforme à l'invention)

L'exemple 3 met en œuvre comme biomasse du bois de peuplier, sous forme de plaquettes de taille moyenne de 50mm de longueur et 10 mm d'épaisseur et dont la teneur en initiale en MS de 55,7%. Avant son traitement, la biomasse est à température ambiante, soit environ 20°C.

La biomasse est introduite dans le même outil d'imprégnation que l'exemple 2, via une première zone de transfert à un débit moyen de 140,2 kg /h. La biomasse compressée est introduite dans un outil d'imprégnation de hauteur utile de 2 mètres, équipé de deux vis parallèles permettant un convoyage vertical de la biomasse à une vitesse linéaire équivalente de 106 m/h. Au pied de l'outil d'imprégnation, 163,9 kg/h de liqueur acide sont ajoutés, cette liqueur acide provient d'une zone de préparation. La température de la liqueur acide injectée est de 80°C. Ainsi dans la première zone d'imprégnation, la biomasse est mise en contact avec une liqueur acide. La température moyenne dans la première zone d'imprégnation est de 55,9°C. En sortie de l'outil d'imprégnation, la biomasse imprégnée est extraite à un débit de 304kg/h. Sa MS est mesurée à 27,1% MS selon la norme ASTM E1756.

La biomasse imprégnée est ensuite convoyée sur un tapis puis transférée dans l'outil de cuisson via une zone de transfert dans une vis conique. Au cours de ce transfert, un liquide (liqueur acide usée) s'écoule à un débit de 161,7 kg/h. Conformément à l'invention, ce liquide appelé pressât, est collecté et pompé vers la zone de préparation de la liqueur acide. Dans le réacteur de cuisson, de la vapeur est injectée à un débit de 416,9 kg/h. Cette injection de vapeur permet de maintenir la température et la pression du réacteur, à respectivement 200°C et 1,49 MPa. En sortie du réacteur de cuisson, la biomasse est dépressurisée rapidement et collectée dans un bac à pression atmosphérique. Au cours du transfert entre le réacteur de cuisson et le bac de collecte, le substrat prétraité est séparé de la phase gaz dans un cyclone. Le débit collecté de substrat ainsi prétraité est de 145,9 kg/h. Sa MS est mesurée à 49,9%. Les vapeurs séparées en tête de cyclone sont condensées manière à produire un condensat avec un débit d'environ 413,3 kg/h.

Le pressât extrait de la seconde zone de transfert vers le réacteur de cuisson est envoyé vers la zone de préparation de liqueur. Cette zone est constituée d'une cuve de mélange et d'un échangeur de chaleur. La cuve de mélange est alimentée par une conduite d'appoint en eau, une conduite d'appoint en solution concentrée d'acide H2SO4 et une conduite amenant le pressât recyclé, et dispose d'une conduite de soutirage de liqueur préparée. L'échangeur de chaleur est placé sur la conduite de liqueur préparée, allant de la cuve de mélange à l'imprégnateur et permet donc de réchauffer la liqueur en sortie de cuve et de contrôler la température de la liqueur introduite dans l'outil d'imprégnation indépendamment de la température de la cuve de mélange et de ses intrants. Dans la configuration retenue, les appoints en eau et en H2SO4 (100%) ont respectivement de 1,2 kg/h et 1 kg/h. La température de sortie de l'échangeur est de 80°C pour la liqueur acide. Ainsi, la mise en œuvre du procédé selon l'invention permet de traiter le bois avec des consommations minimisées en acide et en eau. La consommation spécifique d'acide est de 12,8 g/kg de MS entrante et la consommation spécifique d'eau est de 15,4 g/kg MS.

### Exemple 4 (conforme à l'invention)

L'exemple 4 traite le même bois de peuplier que l'exemple 3. Le procédé traite ainsi un débit nominal de 140,2 kg/h de bois de peuplier sous forme de plaquettes de taille moyenne de 50mm de longueur et 10 mm d'épaisseur, dont la teneur en initiale en MS de 55,7% et qui a été stocké avant traitement à une température de 20°C. La biomasse est introduite dans le même outil d'imprégnation que l'exemple 2 via une première zone de transfert. La biomasse compressée est introduite dans un outil d'imprégnation de hauteur utile de 2 mètres, équipé de deux vis parallèles permettant un convoyage vertical de la biomasse à une vitesse linéaire équivalente de 106 m/h. Au pied de l'outil d'imprégnation, 570 kg/h de liqueur acide sont ajoutés, cette liqueur acide provenant d'une zone de préparation de la liqueur. La température de la liqueur acide injectée est de 80°C. Ainsi dans l'outil d'imprégnation, la biomasse transférée est mise en contact avec une liqueur acide. A 15 cm en dessous du niveau liquide, un soutirage de liqueur usée est réalisé, à un débit de 407 kg/h. Cette liqueur usée est envoyée dans la zone de préparation de la liqueur conformément à l'invention.

La température moyenne dans la première zone d'imprégnation est de 70.1°C. En sortie de l'outil d'imprégnation, la biomasse imprégnée est extraite à un débit de 303,1 kg/h. Sa MS est mesurée à 27,2% selon la norme ASTM E1756.

La biomasse imprégnée est ensuite convoyée sur un tapis puis transférée dans l'outil de cuisson via une zone de transfert dans une vis conique. Au cours de ce transfert, un liquide (liqueur usée) s'écoule à un débit de 161,7 kg/h. Ce liquide, appelé pressât, est collecté et pompé vers la zone de préparation de la liqueur acide. Dans le réacteur de cuisson, de la vapeur est injectée à un débit de 414,2 kg/h. Cette injection de vapeur permet de maintenir la température et la pression du réacteur, à respectivement 200°C et 1,49 MPa. En sortie du réacteur, la biomasse est dépressurisée rapidement et collectée dans un bac à pression atmosphérique. Au cours du transfert entre le réacteur de cuisson et le bac de collecte, la biomasse prétraitée est séparée de la phase gaz dans un cyclone. Le débit collecté de biomasse prétraitée est de 142,5 kg/h. Sa MS est mesurée à 51,1%. Les vapeurs séparées en tête de cyclone sont condensées fournissant un condensat à un débit de 413,1 kg/h. Conformément à l'invention, le pressât extrait de la seconde zone de transfert vers le réacteur de cuisson est envoyé vers la zone de préparation de liqueur. Cette zone est constituée d'une cuve de mélange et d'un échangeur de chaleur. La cuve de mélange est alimentée par une conduite d'appoint en eau, une conduite d'appoint en solution concentrée d'acide H2SO4, une conduite amenant le pressât recyclé et une conduite amenant la liqueur soutirée de la première zone d'imprégnation. La cuve dispose aussi d'une conduite de soutirage de liqueur préparée. L'inventaire de la cuve de mélange est maintenu à 1100kg. L'échangeur de chaleur est placé sur la conduite de liqueur préparée, allant de la cuve de mélange à l'imprégnateur et permet donc de réchauffer la liqueur en sortie de cuve et de contrôler la température de la liqueur introduite dans l'outil d'imprégnation indépendamment de la température de la cuve de mélange et de ses intrants. Dans la configuration retenue, les appoints en eau et en H2SO4 ont respectivement de 1,2 kg/h et 1kg/h. La température de sortie de l'échangeur est de 80°C pour la liqueur acide.

Ainsi, la mise en place d'un soutirage de la liqueur usée dans la première zone d'imprégnation et d'un soutirage du pressât avec leur recyclage dans la cuve de préparation de la liqueur permet d'augmenter la température dans la première zone d'imprégnation de 14.2 °C tout en maintenant la température de chauffe de la liqueur préparée à 80°C, soit en dessous de la température de bulle de ladite liqueur.

## Revendications

1. Procédé continu de traitement d'une biomasse lignocellulosique pour la production de jus sucrés, opéré avant une hydrolyse enzymatique, procédé comprenant
1) une première zone de transfert d'une biomasse broyée vers une première zone d'imprégnation de l'étape d'imprégnation, lesdites zones étant séparées par un bouchon de biomasse empêchant la remontée de liquide de ladite première zone d'imprégnation vers la première zone de transfert,
2) une étape d'imprégnation sous pression atmosphérique réalisée dans 2 zones d'imprégnation superposées opérant à une température de 10-95°C, le temps de séjour de la biomasse dans ladite étape étant de 1mn-60mn, et
- ladite première zone d'imprégnation reçoit la biomasse pressée issue de la première zone de transfert et elle contient une liqueur d'imprégnation à pH compris entre 0.1 et 7
et
- ladite biomasse est transférée dans une seconde zone d'imprégnation, située au-dessus de ladite première zone d'imprégnation, dans laquelle la biomasse imprégnée s'égoutte de manière à produire une biomasse humide résultante ayant une teneur en matière sèche comprise entre 15% pds et 40% pds, et une liqueur séparée,
3) une deuxième zone de transfert de la biomasse humide à l'étape d'explosion à la vapeur,
- ladite deuxième zone de transfert étant disposée dans une enceinte séparée d'une part des zones d'imprégnation de ladite étape d'imprégnation et d'autre part des zones de l'étape d'explosion à la vapeur,
- la seconde zone d'imprégnation et le réacteur de l'étape d'explosion à la vapeur étant séparées de façon étanche par un bouchon de biomasse, et
- dans ladite deuxième zone de transfert, la biomasse humide est pressée de façon à augmenter la teneur en matière sèche de la biomasse à 40% pds ou plus, et, produire une liqueur résultante,
4) une étape d'explosion à la vapeur comportant
- une zone de cuisson pendant 1-30mn de la biomasse par injection de vapeur avec une consommation spécifique de vapeur comprise entre 0.05 et 10 tonne/tonne de matière sèche de biomasse entrant dans ladite zone, ladite zone de cuisson étant à une température de 150-250°C et une pression de 0.5-4 MPa,
- puis une zone de détente de la biomasse issue de la zone de cuisson,
- puis une zone de séparation de la vapeur de la biomasse,
5) une étape de préparation de la liqueur mettant en œuvre un appareil de préparation apte à,
- recevoir de la liqueur extraite de la deuxième zone de transfert et/ou de la première zone d'imprégnation,
- recevoir des apports en acide et/ou eau déterminés de façon à maintenir le pH en entrée de la première zone d'imprégnation à une valeur comprise entre 0.1 et 7
et dans lequel ladite liqueur préparée est introduite dans la première zone d'imprégnation.

2. Procédé selon la revendication 1 dans lequel ladite étape d'imprégnation est réalisée en une seule étape.

3. Procédé selon l'une des revendications précédentes dans lequel
- l'étape d'imprégnation est réalisée dans 2 zones d'imprégnation disposées verticalement l'une au-dessus de l'autre et selon le même axe, séparées de façon à laisser passer la liqueur de la seconde zone vers la première zone d'imprégnation et de façon à retenir la biomasse dans la seconde zone d'imprégnation, le niveau du liquide de la première zone d'imprégnation assurant la séparation entre lesdites 2 zones,
- ladite biomasse est transférée au moyen de vis de ladite première zone d'imprégnation dans ladite seconde zone d'imprégnation.

4. Procédé selon l'une des revendications précédentes dans lequel le niveau de liqueur est maintenu quasi constant par apport de liqueur acide.

5. Procédé selon l'une des revendications précédentes dans lequel la liqueur acide est uniquement une solution d'acide sulfurique.

6. Procédé selon l'une des revendications précédentes dans lequel la liqueur acide a un pH compris entre 0.1 et 2.

7. Procédé selon l'une des revendications précédentes dans lequel ladite étape de préparation de la liqueur acide reçoit de la liqueur extraite de la deuxième zone de transfert et éventuellement de la liqueur de la première zone d'imprégnation.

8. Procédé selon l'une des revendications précédentes dans lequel ladite étape de préparation de la liqueur acide reçoit de la liqueur de la première zone d'imprégnation et éventuellement de la liqueur extraite de la deuxième zone de transfert.

9. Procédé selon l'une des revendications précédentes dans lequel dans ladite deuxième zone de transfert de la biomasse humide la teneur en matière sèche de la biomasse après pressage est entre 40% et 70% pds, et de préférence est supérieure à 40% pds.

10. Procédé selon l'une des revendications précédentes dans lequel la zone de cuisson est un réacteur tubulaire horizontal, et munie d'une ou plusieurs vis transportant la biomasse de la deuxième zone de transfert en amont vers la zone de détente en aval.

11. Procédé selon l'une des revendications précédentes dans lequel la biomasse broyée a une taille d'au plus 300mm.

12. Procédé selon l'une des revendications précédentes dans lequel une partie au moins de la biomasse issue de l'étape d'explosion à la vapeur est soumise à une hydrolyse enzymatique et il est obtenu des jus sucrés.

13. Procédé selon la revendication 12 dans lequel une partie au moins des jus sucrés est soumise à une fermentation alcoolique.

14. Installation de traitement continu d'une biomasse lignocellulosique avant hydrolyse enzymatique, comprenant :
1) une première zone de transfert avec pressage de la biomasse broyée vers une première zone d'imprégnation d'un réacteur d'imprégnation, lesdites zones étant séparées par un bouchon de biomasse empêchant la remontée de liquide de ladite première zone d'imprégnation vers la première zone de transfert,
2) un réacteur d'imprégnation comprenant 2 zones d'imprégnation superposées, la seconde zone d'imprégnation étant située au-dessus de la première zone d'imprégnation
- ladite première zone d'imprégnation contenant une liqueur acide et étant munie d'une ouverture d'entrée de la biomasse pressée issue de la première zone de transfert,
- le réacteur étant muni d'une vis transférant ladite biomasse de ladite ouverture d'entrée dans la première zone d'imprégnation à l'ouverture de sortie de la seconde zone d'imprégnation,
- la seconde zone d'imprégnation située au-dessus du liquide de la première zone d'imprégnation étant munie de grille(s) laissant s'écouler le liquide de la seconde zone d'imprégnation dans la première zone d'imprégnation et retenant la biomasse humide dans la seconde zone,
3) une deuxième zone de transfert avec pressage de la biomasse humide vers une zone d'explosion à la vapeur,
- ladite deuxième zone de transfert étant disposée dans une enceinte séparée d'une part des zones d'imprégnation et d'autre part de la zone d'explosion à la vapeur,
- la seconde zone d'imprégnation et la zone d'explosion à la vapeur étant séparés par un bouchon de biomasse pressée de façon à augmenter la teneur en matière sèche de la biomasse à 40% pds ou plus, ledit bouchon empêchant la remontée de liquide de ladite première zone vers la deuxième zone de transfert, et
- ladite deuxième zone de transfert, étant munie d'une conduite de soutirage de la liqueur usée séparée de la biomasse humide lors du pressage,
4) la zone d'explosion à la vapeur comportant une vis de transfert de la biomasse à travers les zones successives suivantes :
- une zone de cuisson de la biomasse munie d'une conduite pour amener la biomasse pressée issue de la deuxième zone de transfert et d'une conduite d'injection de vapeur,
- une zone de détente de la biomasse issue de la zone de cuisson,
- une zone de séparation de la vapeur de la biomasse,
5) une zone de préparation de la liqueur acide munie
- d'une conduite amenant la liqueur usée soutirée de la deuxième zone de transfert à l'explosion et/ou une conduite amenant la liqueur usée soutirée de la première zone d'imprégnation,
- d'une conduite amenant l'acide et/ou une conduite amenant l'eau
- d'une conduite de recyclage dans la première zone d'imprégnation de ladite liqueur acide préparée,
- d'un système d'agitation et éventuellement d'un moyen de chauffage.

## Patentansprüche

1. Kontinuierliches Verfahren zur Behandlung einer Lignocellulose-Biomasse zur Herstellung von gezuckerten Säften, das vor einer enzymatischen Hydrolyse betrieben wird, wobei das Verfahren umfasst:
1) eine erste Zone für den Transfer einer zerkleinerten Biomasse zu einer ersten Zone für das Imprägnieren des Imprägnierschritts, wobei die genannten Zonen durch einen Biomasseverschluss getrennt sind, der das Wiederaufsteigen von Flüssigkeit von der genannten ersten Imprägnierzone in die erste Transferzone verhindert,
2) einen Imprägnierschritt unter Atmosphärendruck, der in 2 übereinander liegenden Imprägnierzonen durchgeführt wird, die bei einer Temperatur von 10 bis 95 °C betrieben werden, wobei die Verweilzeit der Biomasse in dem genannten Schritt von 1 min bis 60 min beträgt, und
- wobei die erste Imprägnierzone die gepresste Biomasse aus der ersten Transferzone aufnimmt und sie einen Imprägnierliquor bei einem pH zwischen 0,1 und 7 enthält,
und
- wobei die genannte Biomasse in eine zweite Imprägnierzone transferiert wird, die über der genannten ersten Imprägnierzone angeordnet ist, in die sich die imprägnierte Biomasse ergießt, um eine erhaltene feuchte Biomasse mit einem Gehalt an Trockenmaterial zwischen 15 Gew.-% und 40 Gew.-% und einen getrennten Liquor zu erzeugen,
3) eine zweite Zone für den Transfer der feuchten Biomasse in den Dampfexplosionsschritt,
- wobei die genannte zweite Transferzone in einer Umhüllung angeordnet ist, die einerseits von den Imprägnierzonen des genannten Imprägnierschritts und andererseits von den Zonen des Dampfexplosionsschritts getrennt ist,
- wobei die zweite Imprägnierzone und der Reaktor des Dampfexplosionsschritts dicht durch einen Biomasseverschluss getrennt sind, und
- wobei in der genannten zweiten Transferzone die feuchte Biomasse gepresst wird, um den Gehalt an Trockenmaterial der Biomasse auf 40 Gew.-% oder mehr zu erhöhen, und um einen erhaltenen Liquor zu erzeugen,
4) einen Dampfexplosionsschritt, umfassend:
- eine Kochzone der Biomasse während 1 bis 30 min durch Dampfeinspritzung mit einem spezifischen Dampfverbrauch von zwischen 0,05 und 10 Tonne/Tonne des Trockenmaterials der Biomasse, die in die genannte Zone eintritt, wobei sich die genannte Kochzone auf einer Temperatur von 150 bis 250 °C und einem Druck von 0,5 bis 4 MPa befindet,
- anschließend eine Entspannungszone der Biomasse aus der Kochzone,
- dann eine Trennzone des Dampfs von der Biomasse, 5) einen Schritt der Herstellung des Liquors, wobei eine Herstellungsvorrichtung verwendet wird, die dafür geeignet ist, um:
- den Liquor aufzunehmen, der aus der zweiten Transferzone und/oder aus der ersten Imprägnierzone extrahiert wird,
- die bestimmten Zufuhren an Säure und/oder Wasser aufzunehmen, um den pH am Eingang der ersten Imprägnierzone auf einem Wert zu halten, der zwischen 0,1 und 7 liegt,
und wobei der genannte hergestellte Liquor in die erste Imprägnierzone eingebracht wird.

2. Verfahren nach Anspruch 1, wobei der genannte Imprägnierschritt in einem einzigen Schritt durchgeführt wird.

3. Verfahren nach einem der vorhergehenden Ansprüche, wobei:
- der Imprägnierschritt in 2 Imprägnierzonen durchgeführt wird, die vertikal eine über der anderen und gemäß derselben Achse angeordnet sind, und getrennt sind, um den Liquor von der zweiten Zone in die erste Imprägnierzone passieren zu lassen, und um die Biomasse in der zweiten Imprägnierzone zu halten, wobei der Flüssigkeitspegel der ersten Imprägnierzone die Trennung zwischen den genannten 2 Zonen sicherstellt,
- die genannte Biomasse mit Hilfe von Schnecken von der genannten ersten Imprägnierzone in die genannte zweite Imprägnierzone transferiert wird.

4. Verfahren nach einem der vorhergehenden Ansprüche, wobei der Liquorpegel durch die Zufuhr von saurem Liquor quasi konstant gehalten wird.

5. Verfahren nach einem der vorhergehenden Ansprüche, wobei der saure Liquor nur eine Lösung von Schwefelsäure ist.

6. Verfahren nach einem der vorhergehenden Ansprüche, wobei der saure Liquor einen pH von zwischen 0,1 und 2 aufweist.

7. Verfahren nach einem der vorhergehenden Ansprüche, wobei der genannte Schritt zur Herstellung des sauren Liquors Liquor, der aus der zweiten Transferzone extrahiert wird, und gegebenenfalls Liquor aus der ersten Imprägnierzone aufnimmt.

8. Verfahren nach einem der vorhergehenden Ansprüche, wobei der genannte Schritt zur Herstellung des sauren Liquors Liquor aus der ersten Imprägnierzone und gegebenenfalls Liquor, der aus der zweiten Transferzone extrahiert wird, aufnimmt.

9. Verfahren nach einem der vorhergehenden Ansprüche, wobei in der genannten zweiten Zone für den Transfer von feuchter Biomasse der Gehalt an Trockenmaterial der Biomasse nach dem Pressen zwischen 40 Gew.-% und 70 Gew.-% beträgt und vorzugsweise größer ist als 40 Gew.-%.

10. Verfahren nach einem der vorhergehenden Ansprüche, wobei die Kochzone ein horizontaler Rohrreaktor ist und mit einer oder mehreren Schnecken versehen ist, welche die Biomasse aus der zweiten Transferzone stromaufwärts in die Entspannungszone stromabwärts transportieren.

11. Verfahren nach einem der vorhergehenden Ansprüche, wobei die zerkleinerte Biomasse eine Größe von höchstens 300 mm aufweist.

12. Verfahren nach einem der vorhergehenden Ansprüche, wobei mindestens ein Teil der Biomasse aus dem Dampfexplosionsschritt einer enzymatischen Hydrolyse unterzogen wird, und gezuckerte Säfte erhalten werden.

13. Verfahren nach Anspruch 12, wobei mindestens ein Teil der gezuckerten Säfte einer alkoholischen Fermentation unterzogen wird.

14. Anlage zur kontinuierlichen Behandlung einer Lignocellulose-Biomasse vor einer enzymatischen Hydrolyse, umfassend:
1) eine erste Transferzone mit Pressen der zerkleinerten Biomasse zu einer ersten Imprägnierzone eines Imprägnierreaktors, wobei die genannten Zonen durch einen Biomasseverschluss getrennt sind, der das Wiederaufsteigen von Flüssigkeit von der genannten ersten Imprägnierzone in die erste Transferzone verhindert,
2) einen Imprägnierreaktor, umfassend 2 übereinander liegende Zonen, wobei die zweite Imprägnierzone über der ersten Imprägnierzone angeordnet ist,
- wobei die genannte erste Imprägnierzone einen sauren Liquor enthält und mit einer Eingangsöffnung der gepressten Biomasse aus der ersten Transferzone versehen ist,
- wobei der Reaktor mit einer Schnecke versehen ist, welche die genannte Biomasse von der genannten Eingangsöffnung in die erste Imprägnierzone zu der Ausgangsöffnung der zweiten Imprägnierzone transferiert,
- wobei die zweite Imprägnierzone, die über der ersten Imprägnierzone angeordnet ist, mit einem Gitter oder Gittern versehen ist, welche die Flüssigkeit aus der zweiten Imprägnierzone in die erste Imprägnierzone strömen lassen und die feuchte Biomasse in der zweiten Zone halten,
3) eine zweite Zone für den Transfer nach dem Pressen der feuchten Biomasse in eine Dampfexplosionszone,
- wobei die genannte zweite Transferzone in einer Umhüllung angeordnet ist, die einerseits von den Imprägnierzonen und andererseits von der Dampfexplosionszone getrennt ist,
- wobei die zweite Imprägnierzone und die Dampfexplosionszone durch einen Biomasseverschluss getrennt sind, um den Gehalt an Trockenmaterial der Biomasse auf 40 Gew.-% oder mehr zu erhöhen, wobei der Verschluss das Wiederaufsteigen der Flüssigkeit von der genannten ersten Zone in die zweite Transferzone verhindert, und
- wobei die genannte zweite Transferzone mit einer Leitung zum Abziehen des verbrauchten Liquors versehen ist, der von der feuchten Biomasse während des Pressens getrennt wird,
4) die Dampfexplosionszone, umfassend eine Schnecke für den Transfer der Biomasse quer durch die folgenden aufeinanderfolgenden Zonen:
- eine Kochzone der Biomasse, die mit einer Leitung zum Führen der gepressten Biomasse aus der zweiten Transferzone und einer Leitung zum Einspritzen von Dampf versehen ist,
- eine Entspannungszone der Biomasse aus der Kochzone,
- eine Trennzone des Dampfs von der Biomasse,
5) eine Zone zur Herstellung des sauren Liquors, die versehen ist mit:
- einer Leitung, die den verbrauchten Liquor, der aus der zweiten Transferzone durch Explosion abgezogen wird, führt, und/oder einer Leitung, die den verbrauchten Liquor, der aus der ersten Imprägnierzone abgezogen wird, führt,
- einer Leitung, welche die Säure führt, und/oder eine Leitung, welche das Wasser führt,
- einer Rückführleitung des hergestellten sauren Liquors in die genannte erste Imprägnierzone,
- einem Rührsystem und gegebenenfalls einem Heizmittel.

## Claims

1. Continuous process for treating a lignocellulosic biomass for the production of sugary juices, carried out before an enzymatic hydrolysis, the process comprising:
1) a first transfer zone for transferring a milled biomass to a first impregnation zone of the impregnation step, said zones being separated by a plug of biomass preventing liquid upflow from said first impregnation zone to the first transfer zone,
2) an impregnation step under atmospheric pressure carried out in 2 superposed impregnation zones operating at a temperature of 10-95°C, the residence time of the biomass in said step being 1 min - 60 min, and
- said first impregnation zone receives the pressed biomass resulting from the first transfer zone and it contains an impregnation liquor having a pH of between 0.1 and 7,
and
- said biomass is transferred to a second impregnation zone, located above said first impregnation zone, in which the impregnated biomass is drained, so as to produce a resulting wet biomass having a total solids content of between 15 wt% and 40 wt%, and a separate liquor,
3) a second transfer zone for transferring the wet biomass to the steam explosion step,
- said second transfer zone being positioned in a chamber separated, on the one hand, from the impregnation zones of said impregnation step and, on the other hand, from the zones of the steam explosion step,
- the second impregnation zone and the reactor of the steam explosion step being separated in a leaktight manner by a plug of biomass, and
- in said second transfer zone, the wet biomass is pressed so as to increase the total solids content of the biomass to 40% by weight or more, and produce a resulting liquor,
4) a steam explosion step comprising
- a cooking zone for cooking the biomass for 1-30 min by injection of steam with a specific steam consumption of between 0.05 and 10 tonnes/tonne of biomass total solids entering said zone, said cooking zone being at a temperature of 150-250°C and a pressure of 0.5-4 MPa,
- then an expansion zone for expanding the biomass resulting from the cooking zone,
- then a separation zone for separating the steam from the biomass,
5) a step of preparing the liquor using a preparation device suitable for,
- receiving liquor extracted from the second transfer zone and/or from the first impregnation zone,
- receiving inputs of acid and/or water that are determined so as to maintain the pH at the inlet of the first impregnation zone at a value between 0.1 and 7 and in which said prepared liquor is introduced into the first impregnation zone.

2. Process according to Claim 1, wherein said impregnation step is carried out in a single step.

3. Process according to either of the preceding claims, wherein:
- the impregnation step is carried out in 2 impregnation zones positioned vertically one above the other and along the same axis, separated so as to allow the liquor from the second zone to pass to the first impregnation zone and so as to retain the biomass in the second impregnation zone, the level of the liquid of the first impregnation zone ensuring the separation between said 2 zones,
- said biomass is transferred by means of a screw from said first impregnation zone into said second impregnation zone.

4. Process according to one of the preceding claims, wherein the liquor level is kept virtually constant by input of acid liquor.

5. Process according to one of the preceding claims, wherein the acid liquor is only a solution of sulfuric acid.

6. Process according to one of the preceding claims, wherein the acid liquor has a pH of between 0.1 and 2.

7. Process according to one of the preceding claims, wherein said step of preparing the acid liquor receives liquor extracted from the second transfer zone and optionally liquor from the first impregnation zone.

8. Process according to one of the preceding claims, wherein said step of preparing the acid liquor receives liquor from the first impregnation zone and optionally liquor extracted from the second transfer zone.

9. Process according to one of the preceding claims, wherein in said second transfer zone for transferring the wet biomass the total solids content of the biomass after pressing is between 40% and 70% by weight, and preferably is greater than 40% by weight.

10. Process according to one of the preceding claims, wherein the cooking zone is a horizontal tubular reactor, and is provided with one or more screws that transport the biomass from the second transfer zone upstream to the expansion zone downstream.

11. Process according to one of the preceding claims, wherein the milled biomass has a size of at most 300 mm.

12. Process according to one of the preceding claims, wherein at least one portion of the biomass resulting from the steam explosion step is subjected to an enzymatic hydrolysis and sugary juices are obtained.

13. Process according to Claim 12, in which at least one portion of the sugary juices is subjected to an alcoholic fermentation.

14. Unit for the continuous treatment of a lignocellulosic biomass before enzymatic hydrolysis, comprising:
1) a first transfer zone for transferring the milled biomass, with pressing, to a first impregnation zone of an impregnation reactor, said zones being separated by a plug of biomass preventing liquid upflow from said first impregnation zone to the first transfer zone,
2) an impregnation reactor comprising 2 superposed impregnation zones, the second impregnation zone being located above the first impregnation zone
- said first impregnation zone containing an acid liquor and being provided with an inlet opening for the pressed biomass resulting from the first transfer zone,
- the reactor being provided with a screw that transfers said biomass from said inlet opening in the first impregnation zone to the outlet opening of the second impregnation zone,
- the second impregnation zone located above the liquid of the first impregnation zone being provided with screen (s) that allow the liquid to flow from the second impregnation zone into the first impregnation zone and that retain the wet biomass in the second zone,
3) a second transfer zone for transferring the wet biomass, with pressing, to a steam explosion zone,
- said second transfer zone being positioned in a chamber separated, on the one hand, from the impregnation zones and, on the other hand, from the steam explosion zone,
- the second impregnation zone and the steam explosion zone being separated by a plug of pressed biomass so as to increase the total solids content of the biomass to 40% by weight or more, said plug preventing liquid upflow from said first zone to the second transfer zone, and
- said second transfer zone being provided with a line for drawing off the spent liquor separated from the wet biomass during the pressing,
4) the steam explosion zone comprising a screw for transferring the biomass through the following successive zones:
- a biomass cooking zone provided with a line for conveying the pressed biomass resulting from the second transfer zone and a steam injection line,
- an expansion zone for expanding the biomass resulting from the cooking zone,
- a separation zone for separating the steam from the biomass,
5) an acid liquor preparation zone provided
- with a line conveying the spent liquor drawn off from the second transfer zone to the explosion and/or a line conveying the spent liquor drawn off from the first impregnation zone,
- with a line conveying the acid and/or a line conveying the water
- with a line for recycling said prepared acid liquor to the first impregnation zone,
- with a stirring system and optionally with a heating means.
